# EUROPÄISCHE PATENTSCHRIFT

(11) **EP 2 203 657 B1**
(45) Veröffentlichungstag und Bekanntmachung des Hinweises auf die Patenterteilung: **29.12.2010**
(21) Anmeldenummer: 08801486.5
(22) Anmeldetag: 15.07.2008
(51) Int. Cl.: F16D 65/12

(54) **BREMSSCHEIBE**
BRAKE DISK
DISQUE DE FREIN

(30) Priorität: 28.09.2007 DE 202007013658 U
(43) Veröffentlichungstag der Anmeldung: 07.07.2010
(73) Patentinhaber: Faiveley Transport Witten Gmbh, 58454 Witten (DE)
(72) Erfinder: GASPERS, Heinz-Jürgen, 52076 Aachen (DE); HOFFMANN, Helmut, 45476 Mülheim (DE)
(74) Vertreter: Richter, Werdermann, Gerbaulet & Hofmann
(86) Internationale Anmeldenummer: PCT/EP2008/005762
(87) Internationale Veröffentlichungsnummer: WO 2009/043398

(56) Entgegenhaltungen:
- EP-A- 0 309 174
- DE-U1-202006 017 092
- DE-U1-202007 009 345

## Beschreibung

### Technisches Gebiet

Die Erfindung betrifft eine Bremsscheibe, die über ein planseitiges Reibringteil verfügt, auf dem ein Bremsscheibennocken mit einer Nockenbohrung ausgeformt ist.

### Stand der Technik

Bremsscheiben der eingangs genannten Art sind dem Fachmann bekannt und geläufig, wobei die Bremsscheiben einteilig oder zweiteilig ausgeführt sein können.

Zweiteilige Bremsscheiben umfassen eine erste und zweite Scheibenhälfte, welche jeweils halbkreis- bzw. halbringförmig ausgebildet sind, und in einer Teilungsebene aufeinander gebracht werden, um eine einsatzbereite Bremsscheibe zu bilden. Somit kann die Bremsscheibe aufgrund ihrer geteilten Ausführung auf Wellen angeordnet werden, die eine axiale Montage der Bremsscheiben aufgrund der geometrischen Ausgestaltung der Welle nicht zulässt.

Die Innenbelüftung der Bremsscheiben wird ermöglicht, indem diese einen ersten Reibringteil sowie einen zweiten Reibringteil umfassen und die Reibringteile planparallel zueinander mit einem gewissen Abstand angeordnet sind. Zwischen den beiden Reibringteilen ist eine Vielzahl von Kühlrippen angeordnet, zwischen denen wiederum Ventilationskanäle verlaufen. Durch die Bremsscheibenrotation wird Kühlluft durch die Ventilationskanäle geleitet, um eine übermäßige Erhitzung der gesamten Bremsscheibe in Folge Umsetzung der Bremsleistung zu verhindern.

Um zusätzlich die Betriebssicherheit auch bei hohen Betriebsbelastungen durch Stoßbeanspruchung sowie durch thermische Lasten zu gewährleisten, sieht das deutsche Gebrauchsmuster Nr. 20 2007 009 345.4 zudem vor, dass zwischen den Kühlrippen Bremsscheibennocken angeordnet sind. Diese Nocken können in Gestalt von Anbindungsnocken vorliegen, die in unmittelbarer Nähe zum Bremsgurt angeordnet sind und bspw. die Verbindung zwischen der Bremsscheibe und einer Scheibennabe herstellen. Die Nocken ragen dabei radial in Richtung des Mittelpunkts der Bremsscheibe aus einem Reibringteil hervor.

Die Form der Nocken muss dabei mit der Anordnung und Form der Kühlrippen derart zusammenwirken, dass die Betriebssicherheit auch bei hohen Betriebsbelastungen durch Stoßbelastung sowie durch thermische Lasten gewährleistet ist.

Insbesondere können Stoppbremsungen aus hoher Geschwindigkeit hohe Bremsenergieeinträge hervorrufen. Diese Bremsenergieeinträge können wiederum Temperaturdifferenzen innerhalb der Bremsscheibe erzeugen, die Materialspannungen im Bereich der Anbindungsnocken der Bremsscheibe zur Folge haben.

### Darstellung der Erfindung, Aufgabe, Lösung, Vorteile

Unter Würdigung des aufgezeigten Stands der Technik bei Bremsscheiben der eingangs genannten Art liegt der vorliegenden Erfindung daher die Aufgabe zugrunde, eine Bremsscheibe der eingangs genannten Art derart weiterzubilden, dass ausreichende Sicherheiten gegenüber den zulässigen Werkstoffwerten an Bremsscheiben für hochenergetische Anwendungsfälle gegeben sind. Zudem sollen Materialspannungen im Bereich der Bremsnocken der Bremsscheibe, welche durch Temperaturdifferenzen innerhalb der Bremsscheibe als Folge hoher Bremsenergieeinträge hervorgerufen werden, verringert werden.

Diese Aufgabe wird mit den Merkmalen des Anspruchs 1 gelöst.

Vorteilhafte Ausgestaltungen der Erfindung ergeben sich aus den Unteransprüchen.

Gemäß der Erfindung weist der Bremsscheibennocken zwei Armteile auf, die sich beabstandet voneinander von dem planseitigen Reibringteil in Richtung der Nockenbohren erstrecken und vor der Nockenbohrung zusammenlaufen.

Die Armteile weisen dabei jeweils einen Steg auf, der auf dem planseitigen Reibringteil ausgeformt ist und denen sich Arme anschließen, die im Wesentlichen parallel und zum planseitigen Reibringteil beabstandet sind. Auf diese Weise ist gewährleistet, dass der Bremsscheibennocken an den Bremsgurt, der an dem Innenrand des Reibringteils verläuft, über zwei vollständig getrennte Stege angebunden ist. Der Grundgedanke der Erfindung ist die Aufspaltung des Bremsscheibennockens in zwei getrennte Armteile außer im Bereich der Nockenbohrung.

Der Vorteil der Erfindung ist es, dass durch eine derartige Ausformung des Bremsscheibennockens eine Bewegungsmöglichkeit der Armteile des Nockens bei thermischer Ausdehnung der Bremsscheibe gegeben ist und somit eine Reduzierung des Spannungsanstiegs in den Armteilen sowie im Fußbereich, d. h. in den Stegen des Armteils bewirkt. Die erfindungsgemäße Bremsscheibe eignet sich insbesondere bei hohen Stoß- und thermischen Betriebsbelastungen.

Vorzugsweise erstrecken sich die Armteile in Richtung eines Innenrandes des planseitigen Reibringteils. Die Nockenbohrung ist dabei von dem Innenrand versetzt angeordnet.

Eine vorteilhafte Ausgestaltung der Erfindung sieht vor, dass der Radius der Stege zur Oberfläche des planseitigen Reibringteils hin zunimmt. Durch eine derartige Vergrößerung der Radien werden hohe Druck-Zugspannungen bei Schirmung der Bremsscheibe vermieden. Dazu trägt auch bei, dass die Stege des Bremsscheibennockens in Axialrichtung und zum Innenrand des planseitigen Reibringteils hin schräg ausgebildet sind.

Vorzugsweise ist der Bremsscheibennocken an der stegabgewandten Seite rundlich oder ovalförmig ausgebildet.

Zu einer weiteren Verringerung der Materialspannungen trägt auch bei, dass die Arme in Richtung des Außenrandes des planseitigen Reibringteils seitwärts voneinander weggestreckt sind und die Arme an ihren Schmalseiten, die vor der Nockenbohrung zusammenlaufen, rundlich ausgebildet sind.

Im Rahmen der Erfindung schließt sich der Bremsscheibennocken an einen Bremsgurt des Reibringteils an und befindet sich somit in unmittelbarer Nähe des Bremsgurts, der entlang des Innenrandes des Reibringteils verläuft.

Weitere vorteilhafte Ausgestaltungen der Erfindung sehen vor, dass der Bremsscheibennocken zwischen Kühlrippen des Reibringteils angeordnet ist. Zudem sieht die Erfindung vor, dass zwischen den Bremsscheibennocken und dem Außenrand des planseitigen Reibringteils Kühlrippen angeordnet sind.

### Kurze Beschreibung der Zeichnungen

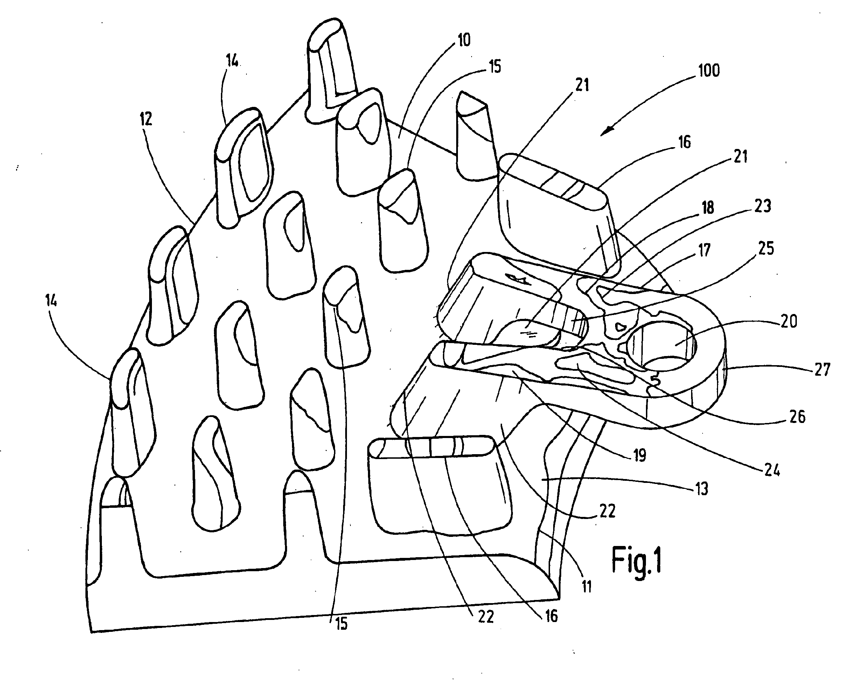

Im Folgenden wird die Erfindung anhand der Figur 1 näher erläutert.

Figur 1 zeigt in einer schematischen Darstellung eine Draufsicht auf einen Ausschnitt eines Reibringteils, wobei die Ansicht die Anordnung der Kühlrippen sowie des Bremsscheibennockens sowie dessen Ausgestaltung zeigt.

Bei der Figur 1 handelt es sich dabei lediglich um eine beispielhafte technische Ausführung der vorliegenden Erfindung.

### Bester Weg zur Ausführung der Erfindung

Die in Figur 1 dargestellte Bremsscheibe ist mit dem Bezugszeichen 100 versehen.

Diese besteht prinzipiell aus zwei planseitigen Reibringteilen, wobei in Figur 1 lediglich ein Reibringteil 10 dargestellt ist. Die Reibringteile bilden die Reibflächen der Bremsscheibe 100. Das Reibringteil 10 wird von einem Innenrand 11 und einem Außenrand 12 begrenzt. Im Bereich des Innenrands 11 befindet sich der Eingangsradius bzw. der Bremsscheibengurt 13. Auf dem Reibringteil 10 erstreckt sich eine Vielzahl von Kühlrippen 14, 15, 16, welche die Bremsscheibe 10 beim Bremsvorgang durch eine entstehende Konvektion zwischen den Kühlrippen kühlen. Darüber hinaus tragen die Kühlrippen 14, 15, 16 zur mechanischen Verbindung zwischen dem Reibringteil 10 und einem zweiten, hier nicht dargestellten, Reibringteil der Bremsscheibe 100 bei.

Der Bremsscheibennocken 17 ist zwischen den Kühlrippen 16 angeordnet. Zudem befinden sich Kühlrippen 14, 15 zwischen dem Bremsscheibennocken 17 und dem Außenrand 12 des planseitigen Reibringteils 10. Der Bremsscheibennocken 17 dient der Anbindung der Bremsscheibe 100 bspw. an eine Narbe. Um darüber hinaus Materialspannungen zu reduzieren, weist der Bremsscheibennocken 17 zwei Armteile 18, 19 auf, die sich beabstandet voneinander von dem planseitigen Reibringteil 10 in Richtung der Nockenbohrung 20 erstrecken und vor der Nockenbohrung 20 zusammenlaufen. Dabei ist die Nockenbohrung 20 von dem Innenrand 11 versetzt angeordnet.

Die Armteile 18, 19 weisen jeweils einen Steg 21, 22 auf, die auf dem planseitigen Reibringteil 100 ausgeformt sind und denen sich Arme 23, 24 anschließen, die im Wesentlichen parallel und zum planseitigen Reibringteil 10 beabstandet angeordnet sind. Der Radius der Stege 21, 22 nimmt zur Oberfläche des planseitigen Reibringteils 10 hin zu. Im Rahmen der Erfindung ist es auch möglich, dass sich der Bremsscheibennocken 17 zur Nockenbohrung 20 verjüngt.

In der hier gezeigten Ausführungsform sind die Arme 23, 24 in Richtung des Außenrands 12 des planseitigen Reibringteils 10 seitwärts voneinander weggestreckt. Zudem sind die Arme 23, 24 an ihren Schmalseiten 25, 26, die vor der Nockenbohrung 20 zusammenlaufen, rundlich ausgebildet, wohingegen der Bremsscheibennocken 17 an der stegabgewandten Seite 27 rundlich ausgeformt ist. Ggf. kann der Bremsscheibennocken 17 an der stegabgewandten Seite 27 auch ovalförmig ausgebildet sein. Zwecks Vermeidung hoher Druck-/Zugspannungen bei Schirmung der Bremsscheibe sind die Stege 21, 22 in Axialrichtung und zum Innenrand 11 hin schräg ausgebildet.

Die vorliegende Erfindung beschränkt sich in ihrer Ausführungsform nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch machen. Somit können bspw. die Stege 21, 22 über unterschiedliche Radien verfügen. Auch können die Kühlrippen 14, 15, 16 selbstverständlich unterschiedliche Ausgestaltungen haben. Zudem können auch die Stege 21, 22 zusätzlich mit unterschiedlichen Übergangsradien versehen sein. Auch können die Stege 21, 22 verschiedene Ausformungen annehmen.

### Bezugszeichenliste

- 100: Bremsscheibe
- 10: Reibringteil
- 11: Innenrand
- 12: Außenrand
- 13: Bremsscheibengurt
- 14: Kühlrippe
- 15: Kühlrippe
- 16: Kühlrippe
- 17: Bremsscheibennocken
- 18: Armteil
- 19: Armteil
- 20: Nockenbohrung
- 21: Steg
- 22: Steg
- 23: Arm
- 24: Arm
- 25: Schmalseite
- 26: Schmalseite
- 27: stegabgewandte Seite

## Patentansprüche

1. Bremsscheibe (100), die über ein planseitiges Reibringteil (10) verfügt, auf dem ein mit einer Nockenbohrung (20) versehener Bremsscheibennocken (17) ausgeformt ist, **dadurch gekennzeichnet, dass** der Bremsscheibennocken (17) zwei Armteile (18, 19) aufweist, die sich beabstandet voneinander von dem planseitigen Reibringteil (10) in Richtung der Nockenbohrung (20) erstrecken und vor der Nockenbohrung (20) zusammenlaufen.

2. Bremsscheibe nach Anspruch 1, **dadurch gekennzeichnet, dass** sich die Armteile (18, 19) in Richtung eines Innenrandes (11) des planseitigen Reibringteils (10) erstrecken.

3. Bremsscheibe nach Anspruch 2, **dadurch gekennzeichnet, dass** die Nockenbohrung (20) von dem Innenrand (11) versetzt angeordnet ist.

4. Bremsscheibe nach einem der Ansprüche 1 bis 3, **dadurch gekennzeichnet, dass** die Armteile (18, 19) jeweils einen Steg (21, 22) aufweisen, die auf dem planseitigen Reibringteil (10) ausgeformt sind und denen sich Arme (23, 24) anschließen, die im Wesentlichen parallel und zum planseitigen Reibringteil (10) beabstandet angeordnet sind.

5. Bremsscheibe nach einem der vorhergehenden Ansprüche, **dadurch gekennzeichnet, dass** der Radius der Stege (21, 22) zur Oberfläche des planseitigen Reibringteils (10) hin zunimmt.

6. Bremsscheibe nach einem der vorhergehenden Ansprüche, **dadurch gekennzeichnet, dass** sich der Bremsscheibennocken (17) zur Nockenbohrung (20) verjüngt,

7. Bremsscheibe nach Anspruch 4 bis 6, **dadurch gekennzeichnet, dass** der Bremsscheibennocken (17) an einer stegabgewandten Seite (27) rundlich ausgeformt ist.

8. Bremsscheibe nach einem der Ansprüche 4 bis 7, **dadurch gekennzeichnet, dass** die Stege (21, 22) in Axialrichtung und zum Innenrand (11) hin schräg ausgebildet sind.

9. Bremsscheibe nach einem der Ansprüche 4 bis 8, **dadurch gekennzeichnet, dass** die Arme (23, 24) in Richtung des Außenrandes (12) des planseitigen Reibringteils (10) seitwärts voneinander weggestreckt sind.

10. Bremsscheibe nach einem der Ansprüche 4 bis 9, **dadurch gekennzeichnet, dass** die Arme (23, 24) an ihren Schmalseiten (25, 26), die vor der Nockenbohrung (20) zusammenlaufen, rundlich ausgebildet sind.

11. Bremsscheibe nach einem der Ansprüche 4 bis 6, **dadurch gekennzeichnet, dass** der Bremsscheibennocken (17) an der stegabgewandten Seite (27) ovalförmig ausgebildet ist.

12. Bremsscheibe nach einem der vorhergehenden Ansprüche, **dadurch gekennzeichnet, dass** der Bremsscheibennocken (17) zwischen Kühlrippen (16) angeordnet ist.

13. Bremsscheibe nach einem der vorhergehenden Ansprüche, **dadurch gekennzeichnet, dass** zwischen Bremsscheibennocken (17) und Außenrand (12) des planseitigen Reibringteils (10) Kühlrippen (14, 15) angeordnet sind.

14. Bremsscheibe nach einem der vorhergehenden Ansprüche, **dadurch gekennzeichnet, dass** der Bremsscheibennocken (17) an einem Bremsscheibengurt (13) des Reibringteils (10) angeordnet ist.

## Claims

1. Brake disc (100) having a face-end friction ring portion (10) on which a brake disc cam (17) provided with a cam bore (20) is formed, **characterized in that** the brake disc cam (17) has two arm parts (18, 19) which extend, spaced from each other, from the face-end friction ring portion (10) in the direction of the cam bore (20) and converge in front of the cam bore (20).

2. Brake disc according to Claim 1, **characterized in that** the arm parts (18, 19) extend in the direction of an inner edge (11) of the face-end friction ring portion (10).

3. Brake disc according to Claim 2, **characterized in that** the cam bore (20) is arranged offset from the inner edge (11).

4. Brake disc according to one of Claims 1 to 3, **characterized in that** the arm parts (18, 19) each comprise a web (21, 22) which are formed on the face-end friction ring portion (10) and to which arms (23, 24) adjoin, which are substantially arranged parallel and spaced from the face-end friction ring portion (10).

5. Brake disc according to one of the preceding claims, **characterized in that** the radius of the webs (21, 22) increases towards the surface of the face-end friction ring portion (10).

6. Brake disc according to one of the preceding claims, **characterized in that** the brake disc cam (17) tapers towards the cam bore (20).

7. Brake disc according to Claim 4 to 6, **characterized in that** the brake disc cam (17) is formed in a rounded manner on a side (27) facing away from the webs.

8. Brake disc according to one of Claims 4 to 7, **characterized in that** the webs (21, 22) are configured inclined in axial direction and towards the inner edge (11).

9. Brake disc according to one of Claims 4 to 8, **characterized in that** the arms (23, 24) are laterally extended away from each other in the direction of the outer edge (12) of the face-end friction ring portion (10).

10. Brake disc according to one of Claims 4 to 9, **characterized in that** the arms (23, 24) on their narrow sides (25, 26) which converge in front of the cam bore (20) are rounded in shape.

11. Brake disc according to any one of Claims 4 to 6, **characterized in that** the brake disc cam (17) on the side (27) facing away from the web is configured in an oval shape.

12. Brake disc according to one of the preceding claims, **characterized in that** the brake disc cam (17) is arranged between cooling ribs (16).

13. Brake disc according to one of the preceding claims, **characterized in that** between brake disc cam (17) and outer edge (12) of the face-end friction ring portion (10) cooling ribs (14, 15) are arranged.

14. Brake disc according to one of the preceding claims, **characterized in that** the brake disc cam (17) is arranged on a brake disc belt (13) of the friction ring portion (10).

## Revendications

1. Disque de frein (100), qui dispose d'une partie de bague à frottement (10) côté plan, sur laquelle est formée une came de disque de frein (17) dotée d'un alésage de came (20), **caractérisé en ce que** la came de disque de frein (17) présente deux parties de bras (18, 19), qui s'étendent à distance l'un de l'autre depuis la partie de bague à frottement (10) côté plan en direction de l'alésage de came (20) et convergent avant l'alésage de came (20).

2. Disque de frein selon la revendication 1, **caractérisé en ce que** les parties de bras (18, 19) s'étendent en direction d'un bord intérieur (11) de la partie de bague à frottement (10) côté plan.

3. Disque de frein selon la revendication 2, **caractérisé en ce que** l'alésage de came (20) est disposé de façon décalée par rapport au bord intérieur (11).

4. Disque de frein selon l'une quelconque des revendications 1 à 3, **caractérisé en ce que** les parties de bras (18, 19) présentent chacune une nervure (21, 22), qui sont formées sur la partie de bague à frottement (10) côté plan et auxquelles se raccordent des bras (23, 24), qui sont disposés sensiblement en parallèle et à distance de la partie de bague à frottement (10) côté plan.

5. Disque de frein selon l'une quelconque des revendications précédentes, **caractérisé en ce que** le rayon des nervures (21, 22) augmente en direction de la surface de la partie de bague à frottement (10) côté plan.

6. Disque de frein selon l'une quelconque des revendications précédentes, **caractérisé en ce que** la came de disque de frein (17) se rétrécit en direction de l'alésage de came (20).

7. Disque de frein selon les revendications 4 à 6, **caractérisé en ce que** la came de disque de frein (17) est formée de façon arrondie sur un côté (27) opposé à la nervure.

8. Disque de frein selon l'une quelconque des revendications 4 à 7, **caractérisé en ce que** les nervures (21, 22) sont formées en biais dans la direction axiale et en direction du bord intérieur (11).

9. Disque de frein selon l'une quelconque des revendications 4 à 8, **caractérisé en ce que** les bras (23, 24) sont étirés latéralement en partant l'un de l'autre en direction du bord extérieur (12) de la partie de bague à frottement (10) côté plan.

10. Disque de frein selon l'une quelconque des revendications 4 à 9, **caractérisé en ce que** les bras (23, 24) sont conçus arrondis sur leurs bords étroits (25, 26), qui convergent avant l'alésage de came (20).

11. Disque de frein selon l'une quelconque des revendications 4 à 6, **caractérisé en ce que** la came de disque de frein (17) est conçue ovale sur le côté (27) opposé à la nervure.

12. Disque de frein selon l'une quelconque des revendications précédentes, **caractérisé en ce que** la came de disque de frein (17) est disposée entre des nervures de refroidissement (16).

13. Disque de frein selon l'une quelconque des revendications précédentes, **caractérisé en ce que** des nervures de refroidissement (14, 15) sont disposées entre des cames de disque de frein (17) et le bord extérieur (12) de la partie de bague à frottement (10) côté plan.

14. Disque de frein selon l'une quelconque des revendications précédentes, **caractérisé en ce que** la came de disque de frein (17) est disposée sur une membrure du disque de frein (13) de la partie de bague à frottement (10).
